(19) Europäisches Patentamt
European Patent Office
Office européen des brevets

(11) **EP 3 920 101 A1**

(12) **DEMANDE DE BREVET EUROPEEN**

(43) Date de publication:
**08.12.2021 Bulletin 2021/49**

(51) Int Cl.:
**G06N 3/04** (2006.01)    **G06N 3/08** (2006.01)
**G06N 3/063** (2006.01)

(21) Numéro de dépôt: **21176159.8**

(22) Date de dépôt: **27.05.2021**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **05.06.2020 FR 2005884**

(71) Demandeur: **Commissariat à l'Energie Atomique
et aux Energies
Alternatives
75015 Paris (FR)**

(72) Inventeurs:
• **SEDDIK, Mohamed El Amine
91120 PALAISEAU (FR)**
• **TAMAAZOUSTI, Mohamed
92140 CLAMART (FR)**

(74) Mandataire: **Marks & Clerk France
Immeuble "Visium"
22, avenue Aristide Briand
94117 Arcueil Cedex (FR)**

(54) **METHODE DE REDUCTION DE LA TAILLE D'UN RESEAU DE NEURONES ARTIFICIEL**

(57)    Méthode de réduction de la taille d'un réseau de neurones enseignant pour obtenir un réseau de neurones étudiant, comprenant les étapes de :
- Entrainer (201) le réseau enseignant à résoudre un premier problème donné pour un ensemble de données d'apprentissage,
- Lors de l'entrainement du réseau enseignant,
i. Extraire les caractéristiques de sortie de la couche du réseau enseignant sous forme d'un vecteur ayant une première dimension $p_l$,
ii. Appliquer (202) une technique de réduction de dimension aux vecteurs de caractéristiques pour générer une matrice de projection dans un sous-espace de dimension $k_l$ strictement inférieure à la première dimension $p_l$,
- Définir la taille de chaque couche intermédiaire du réseau étudiant comme égale à la dimension $k_l$ du sous-espace,
- Entrainer (203) le réseau étudiant sur le même ensemble de données d'apprentissage pour résoudre conjointement le premier problème et un second problème de reconstruction des caractéristiques extraites du réseau enseignant projetées dans les sous-espaces de dimensions $k_l$.

Fig. 2

EP 3 920 101 A1

**Description**

**Champ d'application**

L'invention concerne le domaine des réseaux de neurones artificiels et plus précisément leur implémentation sur des dispositifs à ressources limitées.

L'invention propose une méthode de réduction de la taille d'un réseau de neurones artificiel dense, ou réseau de grande taille afin de faciliter son implémentation. Autrement dit, la méthode proposée consiste à compresser un réseau de grande taille pour obtenir un réseau de taille réduite apte à résoudre le même problème avec des performances similaires.

**Problème soulevé**

Les réseaux de neurones artificiels sont des méthodes d'apprentissage machine parmi les plus efficaces pour résoudre des problèmes complexes, notamment des problèmes de classification ou de régression. Un réseau de neurones est typiquement constitué de plusieurs couches de neurones interconnectées entre elles. Chaque neurone d'une couche est connecté à un ou plusieurs neurones d'une couche suivante et d'une couche précédente par l'intermédiaire de synapses définies par un poids synaptique.

Les performances d'un réseau de neurones sont généralement liées à sa taille, c'est-à-dire au nombre de couches et au nombre de neurones par couches intermédiaires ou couches cachées. Plus ce nombre est important, plus le réseau pourra résoudre des problèmes ayant une complexité de résolution importante.

Cependant, le nombre de paramètres à gérer et d'opérations à réaliser est également directement lié à la taille du réseau. Ainsi, l'implémentation d'un réseau de grande taille sur un dispositif de calcul à ressources limitées est rendu difficile du fait des limites en termes de capacité de calcul, de capacité de stockage et de limite de bande passante.

Il existe ainsi un problème à résoudre pour permettre l'implémentation d'un réseau de neurones de grande taille sur un dispositif de calcul à ressources limitées sans dégrader significativement les performances d'apprentissage du réseau.

**Art antérieur/ Restrictions de l'état de l'art**

Le document [1] présente une méthode de compression d'un modèle de réseau de neurones qui a pour objectif de réduire le volume de données à sauvegarder lors de l'exécution d'un tel réseau.

La méthode proposée est basée sur une sélection des coefficients synaptiques prépondérants, une quantification et un codage de Huffman de ces coefficients. Elle permet de réduire la taille et la quantité des paramètres du réseau à sauvegarder mais n'a pas d'incidence sur la réduction du nombre d'opérations à réaliser qui reste dépendant du nombre de neurones par couche.

D'autres solutions, comme celles décrites dans les documents [2] ou [3], sont basées sur la mise en œuvre d'un réseau dit réseau étudiant, de faible taille, entrainé pour résoudre le même problème qu'un réseau enseignant, de grande taille, à partir de certaines informations acquises lors de l'entrainement du réseau enseignant.

Une limitation de ces méthodes est que les performances du réseau étudiant sont dépendantes du ratio des tailles respectives des réseaux enseignant et étudiant. En effet, plus la différence entre les tailles des deux réseaux est importante, moins les performances du réseau étudiant seront fiables.

**Réponse au problème et apport solution**

L'invention propose une méthode pour réduire la dimension d'un réseau enseignant de sorte à produire un réseau étudiant entrainé pour résoudre le même problème que le réseau enseignant mais avec des contraintes supplémentaires obtenues grâce à l'entrainement du réseau enseignant.

Plus précisément l'invention utilise des méthodes de réduction de dimension, par exemple l'analyse en composantes principales ou l'analyse discriminante linéaire, pour déterminer de façon optimale les dimensions du réseau étudiant tout en exploitant les caractéristiques les plus pertinentes extraites lors de l'apprentissage du réseau enseignant pour améliorer l'apprentissage du réseau étudiant.

L'invention a pour objet une méthode, mise en œuvre par ordinateur, de réduction de la taille d'un premier réseau de neurones artificiels dit réseau enseignant pour obtenir un second réseau de neurones artificiels de taille réduite dit réseau étudiant, la méthode comprenant les étapes de :

- Entrainer le réseau enseignant à résoudre un premier problème donné pour un ensemble de données d'apprentissage organisées sous la forme de plusieurs vecteurs de données,

- Lors de l'entrainement du réseau enseignant, pour chaque vecteur de données et pour chaque couche intermédiaire du réseau enseignant,

    i. Extraire les caractéristiques de sortie de la couche du réseau enseignant sous forme d'un vecteur ayant une première dimension $p_l$,

    ii. Appliquer une technique de réduction de dimension aux vecteurs de caractéristiques pour générer une matrice de projection dans un sous-espace de dimension $k_l$ strictement inférieure à la première dimension $p_l$,

- Définir la taille de chaque couche intermédiaire du réseau étudiant comme égale à la dimension $k_l$ du sous-espace,

- Entrainer le réseau étudiant sur le même ensemble de données d'apprentissage pour résoudre conjointement le premier problème et un second problème de reconstruction des caractéristiques extraites du réseau enseignant projetées dans les sous-espaces de dimensions $k_l$.

Selon une variante de réalisation de l'invention, le premier problème est un problème de régression ou un problème de classification.

Selon une variante de réalisation de l'invention, la technique de réduction de dimension est basée sur une analyse en composantes principales et comprend les sous-étapes de :

- Calculer la matrice de covariance $C_l$ des vecteurs de caractéristiques de dimension $p_l$,
- Calculer la matrice de projection $U_l$ contenant les $k_l$ vecteurs propres dominants de la matrice de covariance $C_l$.

Selon une variante de réalisation de l'invention, le premier problème est un problème de classification, les données d'apprentissage étant associées à différentes classes et la technique de réduction de dimension est basée sur une analyse discriminante linéaire et comprend les sous-étapes de :

- Calculer la matrice de covariance inter-classes des vecteurs de caractéristiques de dimension $p_l$,

- Calculer la matrice de covariance intra-classes des vecteurs de caractéristiques de dimension $p_l$,

- Calculer la matrice de projection $V_l$ contenant les $k_l$ vecteurs propres dominants de la matrice ratio entre la matrice de covariance inter-classes et la matrice de covariance intra-classes.

Selon une variante de réalisation de l'invention, le premier problème est associé à une première fonction de coût prédéterminée à minimiser et le second problème est associé à une seconde fonction de coût à minimiser définie comme l'erreur quadratique moyenne entre les caractéristiques de sortie des couches intermédiaires du réseau étudiant et les caractéristiques de sortie des couches intermédiaires respectives du réseau enseignant projetées sur le sous-espace de dimension $k_l$ via la matrice de projection $U_l$, $V_l$.

Selon une variante de réalisation de l'invention, pour résoudre conjointement le premier problème et le second problème, l'entrainement du réseau étudiant est réalisé de sorte à minimiser la somme de la première fonction de coût et de la seconde fonction de coût.

Selon une variante de réalisation de l'invention, les données d'apprentissage sont des données image, audio, vidéo, multimédia ou textuelles.

L'invention a aussi pour objet un dispositif de calcul configuré pour implémenter un réseau de neurones artificiel étudiant obtenu à partir d'un réseau de neurones artificiel enseignant en appliquant la méthode selon l'invention.

L'invention a aussi pour objet un programme d'ordinateur comportant des instructions pour l'exécution de la méthode selon l'invention, lorsque le programme est exécuté par un processeur.

L'invention a aussi pour objet un support d'enregistrement lisible par un processeur sur lequel est enregistré un programme comportant des instructions pour l'exécution de la méthode selon l'invention, lorsque le programme est exécuté par un processeur.

D'autres caractéristiques et avantages de la présente invention apparaîtront mieux à la lecture de la description qui suit en relation aux dessins annexés suivants.

[Fig. 1] la figure 1 représente un schéma d'un exemple de réseau de neurones artificiel,

[Fig. 2] la figure 2 représente un organigramme détaillant les étapes de mise en œuvre de la méthode selon l'invention,

[Fig. 3] la figure 3 représente un organigramme illustrant une première variante de réalisation de la méthode selon l'invention,

[Fig. 4] la figure 4 représente un organigramme illustrant une seconde variante de réalisation de la méthode selon l'invention.

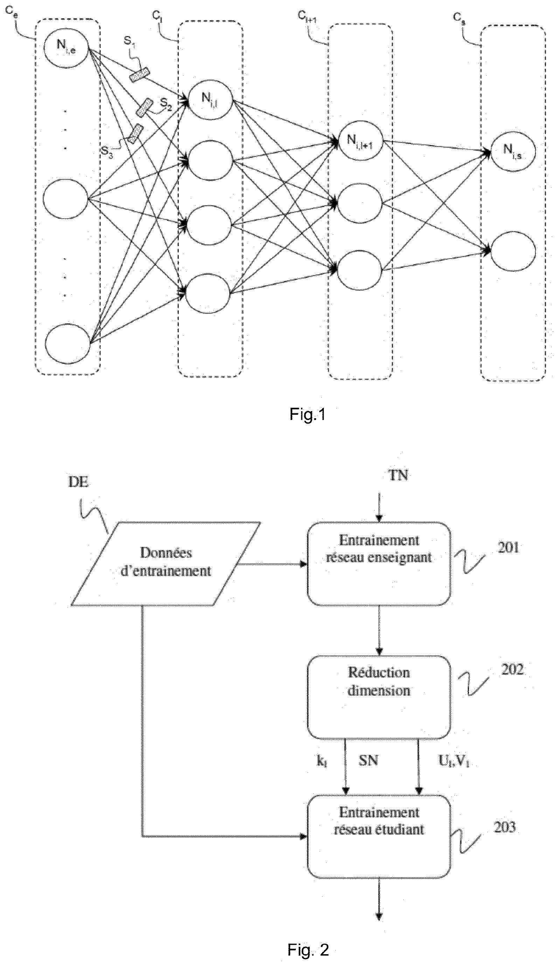

La figure 1 représente un schéma général d'un réseau de neurones artificiels, par exemple un réseau de neurones convolutionnel. Un réseau de neurones est classiquement composé de plusieurs couches $C_e, C_l, C_{l+1}, C_s$ de neurones interconnectés. Le réseau comporte au moins une couche d'entrée $C_e$ et une couche de sortie $C_s$ et plusieurs couches intermédiaires $C_l, C_{l+1}$ encore appelées couches cachées. Les neurones $N_{i,e}$ de la couche d'entrée $C_e$ reçoivent des données d'entrée. Les données d'entrée peuvent être de natures différentes selon l'application visée. Par exemple, les données d'entrée sont des pixels d'une image. Un réseau de neurones a pour fonction générale d'apprendre à résoudre un problème donné, par exemple un problème de classification, de régression, de reconnaissance, d'identification. Un réseau de neurones est, par exemple, utilisé dans le domaine de la classification d'image ou de la reconnaissance d'image ou plus généralement la reconnaissance de caractéristiques qui peuvent être visuelles, audio, textuelles.

Chaque neurone d'une couche est connecté, par son entrée et/ou sa sortie, à tous les neurones de la couche précédente ou suivante. Plus généralement un neurone peut n'être connecté qu'à une partie des neurones d'une autre couche, notamment dans le cas d'un réseau convolutionnel. Les connexions entre deux neurones $N_{i,e}$, $N_{i,l}$ de deux couches successives se font à travers des synapses artificielles $S_1, S_2, S_3$ qui peuvent être réalisées, notamment, par des mémoires numériques ou par des dispositifs memristifs. Les coefficients des synapses sont optimisés grâce à un mécanisme d'apprentissage du réseau de neurones. Le mécanisme d'apprentissage a pour objectif l'entrainement du réseau de neurones à résoudre un problème défini. Ce mécanisme comporte deux phases distinctes, une première phase de propagation de données de la couche d'entrée vers la couche de sortie et une seconde phase de rétro-propagation d'erreurs de la couche de sortie vers la couche d'entrée avec, pour chaque couche, une mise à jour des poids des synapses. Les erreurs calculées par les neurones de sortie à l'issue de la phase de propagation de données sont liées au problème à résoudre. Il s'agit, de manière générale, de déterminer une erreur entre la valeur d'un neurone de sortie et une valeur attendue ou une valeur cible en fonction du problème à résoudre.

Lors de la première phase de propagation de données, des données d'apprentissage, par exemple des images ou séquences d'images de référence, sont fournies en entrée des neurones de la couche d'entrée et propagées dans le réseau. Chaque neurone met en œuvre, pendant cette première phase, une fonction d'intégration des données reçues qui consiste, dans le cas d'un réseau convolutionnel, à calculer une somme des données reçues pondérées par les coefficients des synapses. Autrement dit, chaque neurone réalise une opération de convolution sur une taille de filtre de convolution correspondant à la taille de la sous-matrice de neurones de la couche précédente auxquels il est connecté. Chaque neurone propage ensuite le résultat de la convolution vers les neurones de la couche suivante. Selon les modèles de neurones choisis, la fonction d'intégration qu'il réalise peut varier.

Les neurones $N_{i,s}$ de la couche de sortie $C_s$ exécutent un traitement supplémentaire en ce qu'ils calculent une erreur entre la valeur de sortie du neurone $N_{i,s}$ et une valeur attendue ou une valeur cible qui correspond à l'état final du neurone de la couche de sortie que l'on souhaite obtenir en relation avec les données d'entrée d'apprentissage et le problème à résoudre par le réseau. Par exemple, si le réseau doit résoudre un problème de classification, l'état final attendu d'un neurone correspond à la classe qu'il est censé identifier dans les données d'entrée.

Plus généralement, à chaque problème particulier à résoudre (classification, régression, prédiction) on associe une ou plusieurs fonction(s) de coût à optimiser (par minimisation ou maximisation). Un objectif de la phase de rétro-propagation d'erreurs est de rechercher les paramètres du réseau qui optimisent (par exemple minimisent) la fonction de coût.

La fonction de coût dépend des données propagées entre chaque couche du réseau depuis la couche d'entrée mais aussi d'autres paramètres, par exemple les identifiants des classes auxquelles appartiennent les données dans le cas d'un problème de classification.

Lors de la seconde phase de rétro-propagation d'erreurs, les neurones de la couche de sortie $C_s$ transmettent les erreurs calculées aux neurones de la couche précédente $C_{l+1}$ qui calculent une erreur locale à partir de l'erreur rétro-propagée de la couche précédente et transmettent à leur tour cette erreur locale à la couche précédente $C_l$. En parallèle, chaque neurone calcule, à partir de l'erreur locale, une valeur de mise à jour des poids des synapses auxquelles il est connecté et met à jour les synapses. Le processus se poursuit pour chaque couche de neurones jusqu'à l'avant dernière couche qui est chargée de mettre à jour les poids des synapses qui la relient à la couche d'entrée $C_e$.

La figure 1 représente un exemple donné à titre illustratif et non limitatif. De façon générale, chaque couche intermédiaire d'un réseau peut être connectée totalement ou partiellement à une autre couche.

Les données d'entrée du réseau peuvent être organisées sous la forme de matrices. Le réseau peut être configuré pour générer en sortie un score ou une information de classification ou tout autre type de sortie adaptée selon le problème à résoudre.

Par exemple, si les données d'entrée sont des images ou des caractéristiques extraites d'images ou de séquences d'images, un réseau de neurone peut être configuré pour reconnaitre les objets extraits des images et les classifier selon différentes classes ou catégories prédéfinies. Le problème résolu par le réseau est alors un problème de classification.

Un problème de classification peut aussi être appliqué à des données textuelles, des documents, des pages Internet, des données audio.

Le problème à résoudre par le réseau de neurones peut être de nature très diverse. Il peut s'agir d'un problème de classification d'éléments dans différentes catégories dans l'optique d'apprendre à reconnaitre ces éléments.

Le problème peut aussi consister en l'approximation d'une fonction inconnue ou en une modélisation accélérée d'une fonction connue mais complexe à calculer ou encore un problème de régression ou de prédiction.

Sur la figure 1, on a représenté, à titre purement illustratif, un réseau de neurones comprenant uniquement deux couches intermédiaires et un faible nombre de neurones par couches. Cependant, dans un cas d'application réel, le nombre de couches intermédiaires est souvent plus important et le nombre de neurones par couches atteint plusieurs centaines voire plusieurs milliers de neurones. Un réseau de grande taille est appelé réseau dense.

De ce fait, le grand nombre de paramètres d'un tel réseau implique une capacité de stockage importante pour stocker les coefficients synaptiques et une capacité de calcul élevée pour exécuter un grand nombre d'opérations.

L'invention vise à proposer une solution permettant de réduire les dimensions d'un réseau de neurones dense pour faciliter son implémentation sur un dispositif de calcul à ressources limitées.

La figure 2 illustre les étapes de mise en œuvre de l'invention.

La méthode selon l'invention vise à transformer un réseau de neurones dense TN de grande dimension en un réseau de neurones de dimension réduite SN. Le réseau de neurones en entrée de la méthode est appelé réseau enseignant TN. Le réseau de neurones obtenu en sortie de la méthode est appelé réseau étudiant SN.

La première étape 201 de la méthode consiste à entrainer le réseau enseignant TN sur un ensemble de données d'entrainement DE ou données d'apprentissage pour résoudre un problème donné associé à une fonction de coût à optimiser $L(\theta_{SN})$, avec $\theta_{SN}$ les paramètres du réseau SN à optimiser.

A titre de rappel, on décrit ci-dessous plusieurs exemples de fonction de coût qui peuvent être utilisées pour paramétrer un réseau de neurones lors de l'apprentissage de différents problèmes.

On décrit tout d'abord un exemple qui concerne un problème de classification des données d'entrée dans deux classes distinctes $C_1$ et $C_2$.

Les données d'apprentissage sont notées $x_i$ et sont labellisées via les labels $y_i$. $y_i=0$ si $x_i$ appartient à la première classe $C_1$. $y_i=1$ si $x_i$ appartient à la seconde classe $C_2$.

Un réseau de neurones est construit pour déterminer des prédictions de l'appartenance de nouvelles données à l'une des deux classes. Ces prédictions sont formulées via la relation suivante :

$$\hat{y}_i = \sigma(\beta^T x_i)$$

$\beta$ est un vecteur représentant les paramètres du réseau et $\sigma$ est la fonction sigmoïde.

$$\sigma(t) = \frac{1}{1+e^{-t}}$$

Un exemple de fonction de coût à optimiser pour déterminer les paramètres optimaux du réseau est la fonction suivante :

$$L_{classif}(\beta) = -\frac{1}{n}\sum_{i=1}^{n} y_i \log(\hat{y}_i) + (1 - y_i)\log(1 - \hat{y}_i)$$

Cette fonction de coût est optimisée lors de la phase de rétro-propagation d'erreurs par exemple au moyen d'un algorithme de descente de gradient qui consiste à déterminer les paramètres optimaux par itérations successives.

$\beta_{t+1} = \beta_t - \eta\nabla L_{classif}(\beta_t)$, où $\nabla$ désigne l'opérateur du gradient et $\eta$ un paramètre.

Dans le cas d'un problème de classification à plus de deux classes, un exemple de fonction de coût à optimiser est donné par la relation suivante :

$$L_{classif}(\beta) = -\frac{1}{n}\sum_{i=1}^{n}\sum_{l=1}^{k}(y_i)_l \log[(\sigma(\beta^T x_i))_l]$$

$$(\sigma(v))_i = \frac{e^{v_l}}{\sum_{j=1}^{k} v_j}$$

De façon générale, un réseau de neurones peut être modélisé par une fonction f différente de la fonction σ via la relation suivante :

$\hat{y}_i = f(x_i, \theta)$, avec θ représentant les coefficients synaptiques ou poids du réseau.

L'Homme du métier peut se référer à l'ouvrage de référence [4] sur les réseaux de neurones artificiels pour réaliser l'étape 201 de la méthode selon l'invention pour tout type de problème à résoudre et d'architecture de réseau neuronal.

Dans le cas d'un problème de régression qui consiste à prédire à partir d'une donnée x$_i$, une grandeur correspondante y$_i$ continue, un exemple de fonction de coût est l'erreur quadratique moyenne :

$$L_{regress}(\theta) = \frac{1}{n}\sum_{i=1}^{n}\|y_i - \hat{y}_i\|^2$$

De façon générale, le réseau enseignant TN est composé de L couches de neurones et est modélisé à l'aide des relations suivantes :

$$h^{(0)} = x$$

$$h^{(l)} = f_l(W^{(l)}h^{(l-1)} + b^{(l)})$$

x correspond aux données d'entrées du réseau, autrement dit les données d'entrées de la première couche (l=0) du réseau. Les données x sont des vecteurs de dimension p$_0$ qui est aussi le nombre de neurones de la première couche.

$f_l$ est la fonction d'activation mise en œuvre par les neurones de la couche d'indice l du réseau. $h^{(l)}$ correspond aux caractéristiques produites en sortie des neurones de la couche d'indice l. La dimension du vecteur $h^{(l)}$ qui est aussi le nombre de neurones de la couche d'indice l est noté p$_l$. $W^{(l)}$ est la matrice des poids de dimension p$_l$ par p$_{l-1}$. $b^{(l)}$ est un biais associé à la couche d'indice l.

Les dimensions p$_l$ présentent des valeurs élevées, typiquement plusieurs centaines ou milliers de neurones. Un objectif de l'invention est de réduire ces dimensions.

L'entrainement 201 du réseau enseignant TN est typiquement réalisé sur un ensemble de données d'apprentissage représenté par une matrice X=[x$_1$,...,x$_n$] de dimension p$_0$ par n. Par exemple il s'agit de n images ou séquences d'images ou séquences audio ou textuelles.

La deuxième étape 202 de la méthode selon l'invention consiste à réduire les dimensions p$_l$ en dimensions k$_l$ pour générer un réseau de neurones étudiant SN comprenant autant de couches que le réseau de neurones enseignant TN mais dont les couches intermédiaires (ou couches cachées) ont un nombre de neurones k$_l$ strictement inférieur à p$_l$. Autrement dit la réduction de dimension est appliquée à toutes les couches du réseau enseignant TN sauf la première couche (l=0) et la dernière couche (l=L-1).

Lors de l'entrainement du réseau enseignant TN, les caractéristiques de sortie de chaque couche sont extraites 301 et on note ainsi $H_l = [h_1^{(l)}, ..., h_n^{(l)}]$ la matrice des caractéristiques obtenues pour chaque couche l du réseau TN lors de son entrainement. $h_i^{(l)}$ désigne le vecteur des caractéristiques obtenues en sortie de la couche d'indice l

du réseau enseignant TN à partir des données d'apprentissage $x_i$.

On applique ensuite une méthode de réduction de dimension à la matrice $H_l$ pour générer une matrice de projection dans un sous-espace de dimension $k_l$ strictement inférieure à $p_l$.

Différentes méthodes sont envisageables pour déterminer cette matrice de projection.

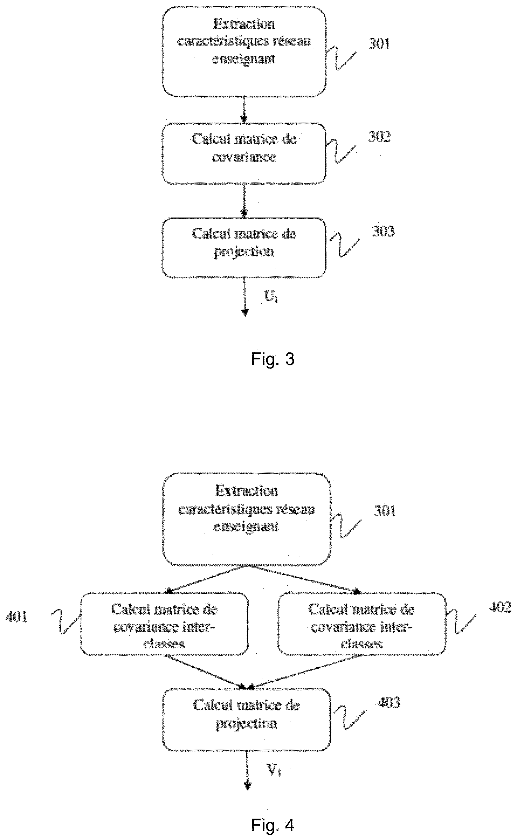

Dans un premier mode de réalisation de l'invention illustré à la figure 3, la méthode de réduction de dimension utilisée est une méthode d'analyse en composantes principales.

A partir des caractéristiques $H_l$ extraites lors de l'entrainement du réseau enseignant TN, on calcule 302 la matrice de covariance :

$$C_l = \frac{1}{n} \sum_{i=1}^{n} \bar{h}_i^{(l)} \bar{h}_i^{(l)T} \quad \text{avec} \quad \bar{h}_i^{(l)} = h_i^{(l)} - \frac{1}{n} \sum_{j=1}^{n} h_j^{(l)}$$

On détermine ensuite 303 la matrice de projection $U_l$ qui contient les $k_l$ vecteurs propres dominants de la matrice $C_l$. Les vecteurs propres dominants correspondent aux valeurs propres les plus élevées de la matrice $C_l$. $U_l$ est une matrice de dimension $p_l$ par $k_l$.

Le paramètre $k_l$ est choisi, par exemple, de sorte à réaliser un compromis entre la réduction de la taille du réseau étudiant SN et le nombre de composantes principales suffisantes de la matrice $U_l$ pour représenter l'information contenue dans la matrice $H_l$.

Le réseau de neurones étudiant SN est alors défini de la façon suivante :

$$\tilde{h}^{(0)} = x$$

$$\tilde{h}^{(l)} = f_l(\tilde{W}^{(l)} \tilde{h}^{(l-1)} + \tilde{b}^{(l)})$$

Les données x d'entrée du réseau sont de même dimension $p_0$ que pour le réseau enseignant TN.

$f_l$ est la fonction d'activation mise en œuvre par les neurones de la couche d'indice l du réseau. $\tilde{h}^{(l)}$ correspond aux caractéristiques produites en sortie des neurones de la couche d'indice l. La dimension du vecteur $\tilde{h}^{(l)}$ qui est aussi le nombre de neurones de la couche d'indice l est égale à $k_l$. $\tilde{W}^{(l)}$ est la matrice des poids de dimension $k_l$ par $k_{l-1}$. $\tilde{b}^{(l)}$ est un biais associé à la couche d'indice l.

A l'étape 203 de la méthode selon l'invention, le réseau étudiant SN est ensuite entrainé à partir des mêmes données d'apprentissage DE que le réseau enseignant TN.

Si on note $L_{problem}$ la fonction de coût associée au problème à résoudre du réseau enseignant TN, le réseau étudiant SN est optimisé pour résoudre un problème conjoint constitué du problème à résoudre par le réseau TN et d'un second problème de reconstruction des caractéristiques extraites du réseau enseignant TN projetées dans les sous-espaces de dimensions $k_l$ définis par les matrices de projection $U_l$.

Ainsi, la fonction de coût à optimiser lors de l'apprentissage du réseau étudiant SN peut être formulée comme suit :

$$L(\theta_{SN}) = e^{-\sigma_{problem}} L_{problem}(\theta_{SN}) + \sigma_{problem} + \sum_{l=1}^{L-1} e^{-\sigma_l} L_{mse}(\theta_{SN} | \tilde{h}^{(l)}, U_l^T h^{(l)}) +$$

$$\sigma_l$$

$L_{mse}$ désigne l'erreur quadratique moyenne

$$L_{mse}(\theta_{SN} | \tilde{h}^{(l)}, U_l^T h^{(l)}) = \frac{1}{n} \sum_{i=1}^{n} \left\| \tilde{h}_i^{(l)} - U_l^T h_i^{(l)} \right\|^2$$

$\tilde{h}_l^{(l)}$ représente le vecteur des caractéristiques associées à la donnée d'entrée $x_i$ et extrait à la couche d'indice l du réseau étudiant SN.

$h_i^{(l)}$ représente le vecteur des caractéristiques associées à la donnée d'entrée $x_i$ et extrait à la couche d'indice l du

réseau enseignant TN.

$\theta_{SN}$ représente les paramètres du réseau étudiant SN à optimiser (autrement dit les poids associés à chaque couche du réseau).

Les paramètres $\sigma_{problem}$ et $\sigma_l$ sont des scalaires optimisés durant le processus d'entrainement.

La fonction de coût $L_{mse}$ correspond à l'erreur quadratique moyenne entre les caractéristiques de sortie des couches intermédiaires du réseau étudiant SN et les caractéristiques de sortie des couches intermédiaires respectives du réseau enseignant TN projetées sur le sous-espace de dimension $k_l$ via la matrice de projection $U_l$.

La fonction de coût globale $L(\theta_{SN})$ est optimisée par exemple au moyen d'un algorithme de descente de gradient qui consiste à déterminer les paramètres optimaux par itérations successives.

$\theta_{SN_{t+1}} = \theta_{SN_t} - \eta\nabla L(\theta_{SN_t})$, où $\nabla$ désigne l'opérateur du gradient et $\eta$ un paramètre.

En particulier, $\tilde{h}_l^{(l)}$ est une fonction qui dépend des poids $\theta_{SN}$. Ainsi, il est possible de calculer le gradient de la fonction $L_{mse}$.

La méthode décrite à la figure 3 est compatible de tout type de problème à résoudre par le réseau de neurones enseignant : problème de classification, régression ou autre.

Un second mode de réalisation est décrit à la figure 4 pour le cas spécifique des réseaux de neurones qui visent à résoudre un problème de classification des données dans plusieurs catégories.

Ce second mode de réalisation exploite une technique d'analyse linéaire discriminante pour réduire les dimensions $p_l$ du réseau enseignant.

On considère ici que les données d'apprentissage sont classifiées comme appartenant à K catégories différentes $\{C_j\}$, j variant de 1 à K.

L'analyse linéaire discriminante est une technique de réduction de dimension qui se base sur la structure de classes des données pour modéliser les différences entre les classes. Cette méthode statistique est notamment décrite dans la référence [5].

A partir des caractéristiques $H_l$ extraites lors de l'entrainement du réseau enseignant TN, on calcule 401 une matrice de covariance inter-classes :

$$S_b^{(l)} = \sum_{j=1}^{K} |C_j| (m_j^{(l)} - m^{(l)})(m_j^{(l)} - m^{(l)})^T$$

Avec $m_j^{(l)} = \frac{1}{|C_j|}\sum_{x \in C_j} h_x^{(l)}$ et $m^{(l)} = \frac{1}{n}\sum_{x \in X} h_x^{(l)}$ $h_x^{(l)}$ est la représentation de la donnée x en sortie de la couche l du réseau enseignant TN.

$|C_j|$ désigne le nombre de données x appartenant à la classe $C_j$.

A l'étape 402, on calcule également une matrice de covariance intra-classes :

$$S_w^{(l)} = \sum_{j=1}^{K} \sum_{x \in C_j} (h_x^{(l)} - m_j^{(l)})(h_x^{(l)} - m_j^{(l)})^T$$

Ensuite, à l'étape 403, on calcule la matrice ratio entre la matrice de covariance inter-classes et la matrice de covariance intra-classes : $S^{(l)} = S_w^{(l)^{-1}} S_b^{(l)}$.

On détermine ensuite la matrice de projection $V_l$ contenant les $k_l$ vecteurs propres dominants de la matrice $S^{(l)}$. $V_l$ est une matrice de dimension $p_l$ par $k_l$. Les vecteurs propres dominants correspondent aux valeurs propres les plus élevées de la matrice $S^{(l)}$.

Le réseau étudiant SN est ensuite défini de la même façon que décrite précédemment et entrainé en optimisant la fonction de coût $L(\theta_{SN})$ décrite précédemment en remplaçant la matrice $U_l$ par la matrice $V_l$.

Une fois entrainé, le réseau étudiant SN peut être implémenté sur un dispositif de calcul à ressources limitées pour être exécuté afin de résoudre le problème initialement traité par le réseau enseignant TN.

L'invention peut être mise en œuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués (*"Cloud computing"*), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

Le réseau de neurones étudiant SN est implémenté sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

L'invention s'applique dans de nombreux domaines dans lesquels il existe un besoin de résoudre un problème complexe, notamment un problème de classification ou de régression.

Par exemple, l'invention s'applique à l'analyse de données images ou vidéos ou plus généralement multimédia pour résoudre un problème de classification, de segmentation ou de détection d'objets dans des données multimédia. Dans ce cas les données d'entrée du réseau sont des données multimédia.

L'invention peut être implémentée dans des dispositifs embarqués, comprenant plusieurs couches de Silicium respectivement dédiées à l'acquisition des données d'entrées (par exemple image, ou vidéo) et aux calculs relatifs au réseau de neurones. Le réseau de neurones étudiant obtenu grâce à l'invention peut être plus facilement embarqué dans un tel dispositif car sa taille est réduite.

L'invention peut aussi s'appliquer à l'analyse de données textuelles.

Références

[1] Song Han et al, « Deep compression : compressing deep neural networks with pruning, trained quantization and Huffman coding », 2015

[2] Seyed-Iman Mirzadeh et al, "Improved knowledge distillation via teacher assistant: bridging the gap between student and teacher", 2019

[3] Junho Yim et al, "A gift from knowledge distillation: fast optimization, network minimization and transfer learning", IEEE conférence on computer vision and pattern récognition, 2017

[4] Paul Rojas, "Neural networks- a systematic introduction", 1996

[5] Alaa Tharwat et al, "Linear discriminant analysis: a detailed tutorial", AI commun, 2017

**Revendications**

1. Méthode, mise en œuvre par ordinateur, de réduction de la taille d'un premier réseau de neurones artificiels dit réseau enseignant (TN) pour obtenir un second réseau de neurones artificiels de taille réduite dit réseau étudiant (SN), la méthode comprenant les étapes de :

   - Entrainer (201) le réseau enseignant à résoudre un premier problème donné pour un ensemble de données d'apprentissage organisées sous la forme de plusieurs vecteurs de données,
   - Lors de l'entrainement du réseau enseignant, pour chaque vecteur de données et pour chaque couche intermédiaire du réseau enseignant,

    i. Extraire (301) les caractéristiques de sortie de la couche du réseau enseignant sous forme d'un vecteur ayant une première dimension $p_l$,
    ii. Appliquer (202) une technique de réduction de dimension aux vecteurs de caractéristiques pour générer une matrice de projection dans un sous-espace de dimension $k_l$ strictement inférieure à la première dimension $p_l$,

- Définir la taille de chaque couche intermédiaire du réseau étudiant comme égale à la dimension $k_l$ du sous-espace,
- Entrainer (203) le réseau étudiant sur le même ensemble de données d'apprentissage pour résoudre conjointement le premier problème et un second problème de reconstruction des caractéristiques extraites du réseau enseignant projetées dans les sous-espaces de dimensions $k_l$.

2. Méthode selon la revendication 1 dans laquelle le premier problème est un problème de régression ou un problème de classification.

3. Méthode selon l'une quelconque des revendications précédentes dans laquelle la technique (202) de réduction de dimension est basée sur une analyse en composantes principales et comprend les sous-étapes de :

- Calculer(302) la matrice de covariance $C_l$ des vecteurs de caractéristiques de dimension $p_l$,
- Calculer (303) la matrice de projection $U_l$ contenant les $k_l$ vecteurs propres dominants de la matrice de covariance $C_l$.

4. Méthode selon la revendication 1 dans laquelle le premier problème est un problème de classification, les données d'apprentissage étant associées à différentes classes et la technique (202) de réduction de dimension est basée sur une analyse discriminante linéaire et comprend les sous-étapes de :

- Calculer (401) la matrice de covariance inter-classes des vecteurs de caractéristiques de dimension $p_l$,
- Calculer (402) la matrice de covariance intra-classes des vecteurs de caractéristiques de dimension $p_l$,
- Calculer (403) la matrice de projection $V_l$ contenant les $k_l$ vecteurs propres dominants de la matrice ratio entre la matrice de covariance inter-classes et la matrice de covariance intra-classes.

5. Méthode selon l'une quelconque des revendications précédentes dans laquelle le premier problème est associé à une première fonction de coût prédéterminée à minimiser et le second problème est associé à une seconde fonction de coût à minimiser définie comme l'erreur quadratique moyenne entre les caractéristiques de sortie des couches intermédiaires du réseau étudiant et les caractéristiques de sortie des couches intermédiaires respectives du réseau enseignant projetées sur le sous-espace de dimension $k_l$ via la matrice de projection $U_l,V_l$.

6. Méthode selon la revendication 5 dans laquelle, pour résoudre conjointement le premier problème et le second problème, l'entrainement du réseau étudiant est réalisé de sorte à minimiser la somme de la première fonction de coût et de la seconde fonction de coût.

7. Méthode selon l'une quelconque des revendications précédentes dans lequel les données d'apprentissage sont des données image, audio, vidéo, multimédia ou textuelles.

8. Dispositif de calcul configuré pour implémenter un réseau de neurones artificiel étudiant obtenu à partir d'un réseau de neurones artificiel enseignant en appliquant la méthode selon l'une quelconque des revendications précédentes.

9. Programme d'ordinateur comportant des instructions pour l'exécution de la méthode selon l'une quelconque des revendications 1 à 7, lorsque le programme est exécuté par un processeur.

10. Support d'enregistrement lisible par un processeur sur lequel est enregistré un programme comportant des instructions pour l'exécution de la méthode selon l'une quelconque des revendications 1 à 7, lorsque le programme est exécuté par un processeur.

Fig.1

Fig. 2

Extraction
caractéristiques réseau
enseignant → 301

↓

Calcul matrice de
covariance → 302

↓

Calcul matrice de
projection → 303

↓ U₁

Fig. 3

Extraction
caractéristiques réseau
enseignant → 301

401 → Calcul matrice de
covariance inter-
classes

Calcul matrice de
covariance inter-
classes ← 402

→ Calcul matrice de
projection → 403

↓ V₁

Fig. 4

Europäisches
Patentamt

European
Patent Office

Office européen
des brevets

**RAPPORT DE RECHERCHE EUROPEENNE**

Numéro de la demande

EP 21 17 6159

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Adriana Romero ET AL: "FitNets: Hints for Thin Deep Nets", ICLR, 19 décembre 2014 (2014-12-19), XP055560031, Extrait de l'Internet: URL:https://arxiv.org/pdf/1412.6550.pdf [extrait le 2019-02-21] * abrégé; figure 1 * * page 2, ligne 30 - page 5, ligne 16 * ----- | 1-10 | INV. G06N3/04 G06N3/08 ADD. G06N3/063 |
| A | MAEDA KEISUKE ET AL: "Neural Network Maximizing Ordinally Supervised Multi-View Canonical Correlation for Deterioration Level Estimation", 2019 IEEE INTERNATIONAL CONFERENCE ON IMAGE PROCESSING (ICIP), IEEE, 22 septembre 2019 (2019-09-22), pages 919-923, XP033647009, DOI: 10.1109/ICIP.2019.8803038 * page 920, colonne 1, ligne 13 - page 921, colonne 1, ligne 46 * ----- | 1-10 | |
| A | US 2018/365564 A1 (HUANG ZEHAO [CN] ET AL) 20 décembre 2018 (2018-12-20) * abrégé; figures 1-4 * * alinéa [0002] - alinéa [0018] * * alinéa [0037] - alinéa [0081] * ----- -/-- | 1-10 | DOMAINES TECHNIQUES RECHERCHES (IPC) G06N |

Le présent rapport a été établi pour toutes les revendications

| Lieu de la recherche | Date d'achèvement de la recherche | Examinateur |
|---|---|---|
| La Haye | 2 juillet 2021 | Rousset, Antoine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 21 17 6159

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | AHMED T ELTHAKEB ET AL: "Divide and Conquer: Leveraging Intermediate Feature Representations for Quantized Training of Neural Networks", ARXIV.ORG, CORNELL UNIVERSITY LIBRARY, 201 OLIN LIBRARY CORNELL UNIVERSITY ITHACA, NY 14853, 14 juin 2019 (2019-06-14), XP081611378, * abrégé; figures 1-3; tableau 1 * * page 1, colonne 1, ligne 1 - page 4, colonne 2, ligne 27 * ----- | 1-10 | |
| A | SHAN YOU ET AL: "Learning from Multiple Teacher Networks", KNOWLEDGE DISCOVERY AND DATA MINING, ACM, 2 PENN PLAZA, SUITE 701NEW YORKNY10121-0701USA, 4 août 2017 (2017-08-04), pages 1285-1294, XP058370700, DOI: 10.1145/3097983.3098135 ISBN: 978-1-4503-4887-4 * abrégé; figure 1 * * page 1286, colonne 2, ligne 10 - page 1290, colonne 2, ligne 36 * ----- | 1-10 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 2 juillet 2021 | Rousset, Antoine |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 17 6159

02-07-2021

| Document brevet cité au rapport de recherche | Date de publication | Membre(s) de la famille de brevet(s) | Date de publication |
|---|---|---|---|
| US 2018365564 A1 | 20-12-2018 | CN 107247989 A | 13-10-2017 |
| | | US 2018365564 A1 | 20-12-2018 |

EPO FORM P0460

## RÉFÉRENCES CITÉES DANS LA DESCRIPTION

**Littérature non-brevet citée dans la description**

- **SONG HAN et al.** *Deep compression : compressing deep neural networks with pruning, trained quantization and Huffman coding,* 2015
- **SEYED-IMAN MIRZADEH et al.** *Improved knowledge distillation via teacher assistant: bridging the gap between student and teacher,* 2019
- **JUNHO YIM et al.** A gift from knowledge distillation: fast optimization, network minimization and transfer learning. *IEEE conférence on computer vision and pattern récognition,* 2017
- **PAUL ROJAS.** *Neural networks- a systematic introduction,* 1996
- **ALAA THARWAT et al.** Linear discriminant analysis: a detailed tutorial. *AI commun,* 2017